Europäisches Patentamt

European Patent Office

Office européen des brevets

(11) Veröffentlichungsnummer: **0 246 435**

**A2**

(12) **EUROPÄISCHE PATENTANMELDUNG**

(21) Anmeldenummer: **87104947.4**

(51) Int. Cl.⁴: **G01K 1/14** , G01K 1/08

(22) Anmeldetag: **03.04.87**

(30) Priorität: **05.04.86 DE 8609230 U**

(43) Veröffentlichungstag der Anmeldung:
**25.11.87 Patentblatt 87/48**

(84) Benannte Vertragsstaaten:
**AT BE CH DE ES FR GB GR IT LI NL SE**

(71) Anmelder: **Walter Schroer Mess- und Regeltechnik**
**Bergische Landstrasse 240**
**D-4000 Düsseldorf 12(DE)**

(72) Erfinder: **Schroer, Walter**
**Karlstrasse 52 A**
**D-4060 Viersen 11(DE)**

(74) Vertreter: **Patentanwaltsbüro Cohausz & Florack**
**Postfach 14 01 47**
**D-4000 Düsseldorf 1(DE)**

(54) **Vorrichtung zum Messen einer Temperatur.**

(57) Die Erfindung betrifft eine Vorrichtung zum Messen einer Temperatur mit einem Widerstands-Oberflächenmeßfühler und einem den Widerstandswert verarbeitenden Verstärker. Der Meßfühler ist im vorderen Ende eines Rohres bzw. einer Hülse befestigt, und das Rohr ist auf der zu messenden Oberfläche befestigbar, insbesondere aufschweißbar. Das der Oberfläche abgewandte Rohrende trägt ein Gehäuse zum elektrischen Anschluß. Der Verstärker ist im Gehäuse (3) befestigt.

EP 0 246 435 A2

## Vorrichtung zum Messen einer Temperatur

Die Erfindung betrifft eine Vorrichtung zum Messen einer Temperatur, mit einem Widerstands-Oberflächenmeßfühler und einem den Widerstandswert verarbeitenden Verstärker, wobei der Meßfühler im vorderen Ende eines Rohres bzw. einer Hülse befestigt ist, das Rohr auf der zu messenden Oberfläche befestigbar, insbesondere aufschweißbar ist und das der Oberfläche abgewandte Rohrende ein Gehäuse zum elektrischen Anschluß trägt.

Es ist bekannt, einen Temperaturwiderstandsmeßfühler an die Oberfläche des zu messenden Gegenstandes zu legen, wobei dieser Meßfühler von einer Hülse umgeben ist, die an dem dem Meßfühler gegenüberliegenden Ende ein Gehäuse trägt, das dem elektrischen Anschluß dient und von dem Kabel zu einem Verstärker führen. Das Übertragen der Meßwerte vom Meßfühler zum Verstärker als auch das Anordnen eines Verstärkers an einem externen Ort ist aufwendig, störungsanfällig und führt zu Ungenauigkeiten der Meßergebnisse.

Aufgabe der Erfindung ist es, eine Vorrichtung der eingangs genannten Art so zu verbessern, daß bei konstruktiv geringem Aufwand ein störungsunanfälliges und sehr exaktes Messen ermöglicht wird.

Diese Aufgabe wird erfindungsgemäß dadurch gelöst, daß der Verstärker im Gehäuse befestigt ist.

Der direkt in der Meßvorrichtung angeordnete Verstärker ermöglicht eine sehr kurze Übertragungsstrecke zwischen dem Meßfühler und dem Verstärker, so daß eine sehr genaue Temperaturerfassung ermöglicht wird. Herstellung. Wartung und Betrieb sind wenig aufwendig und die Störanfälligkeit minimiert. Die vom Verstärker abgegebenen Werte ermöglichen extrem große Übertragungsdistanzen zwischen der Vorrichtung und weiteren Geräten, die diese Werte nutzen oder auswerten.

Der Verstärker ist besonders sicher und geschützt aufgehoben, wenn er im Gehäuse in Kunststoff vollständig eingegossen ist. Hierdurch ist der Verstärker auch sicher gegen aggressive Gase, insbesondere Dämpfe und Flüssigkeiten geschützt. Ein sicherer Schutz des Gehäuses hiergegen wird dadurch erreicht, daß es aus Edelstahl besteht. Das Gehäuse aus Edelstahl (V2A) Werkstoff-Nr. 1.4301 ist wasserdicht, staubdicht, öl-und säurefest.

Um eine Wärmeübertragung vom Gehäuse zum Meßfühler oder von der Meßstelle zum Gehäuse zu verhindern und um somit sehr exakte unverfälschte Meßergebnisse zu erhalten, wird vorgeschlagen, daß ein den gesamten Querschnitt des Rohres ausmachender Abschnitt des Rohres aus Kunststoff ist. Hierbei kann der Kunststoffabschnitt zwischen den beiden Rohrenden sein. Alternativ ist es aber auch möglich, daß der Kunststoffabschnitt zwischen dem vorderen Rohrende und dem Gehäuse ist.

Vorzugsweise wird vorgeschlagen, daß das Gehäuse durch einen Schraubdeckel verschlossen ist. Ein einfaches Öffnen und Schließen des Deckels wird dadurch erreicht, daß der Schraubdeckel am Umfang mindestens eine Ausnehmung für einen Hakenschlüssel aufweist.

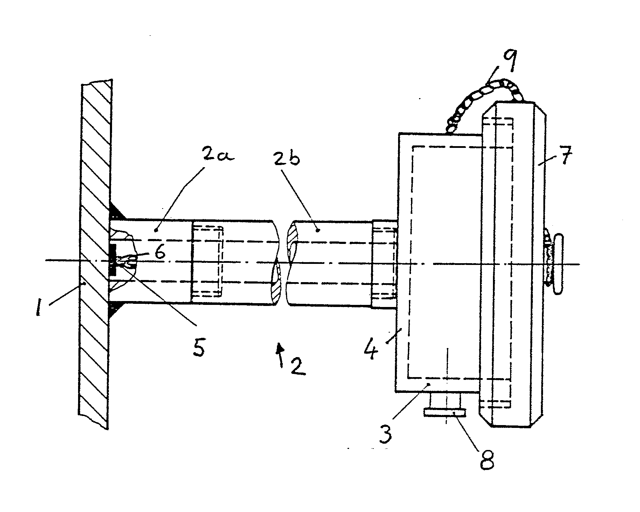

Ein Ausführungsbeispiel der Erfindung ist in der Zeichnung in einer Seitenansicht dargestellt und wird im folgenden näher beschrieben.

An der flächenförmigen Temperaturmeßstelle 1, z.B. an der Außenseite einer Tankwand, ist ein Rohr 2 oder Hülse mit einem Ende rechtwinklig aufgeschweißt. Das Rohr 2 besteht aus einem vorderen metallenen Abschnitt 2a insbesondere aus V2A 1.4301 Stahl und einem daran koaxial angeschraubten Kunststoffabschnitt 2b, an dessen freiem Ende ein topfförmiges Gehäuse 3 koaxial mit seinem Boden 4 angeschraubt ist.

Das an der Temperaturmeßstelle angeschweißte Ende des Rohres 2 enthält einen elektrischen Widerstandsmeßfühler 5, der auf der Oberfläche der Temperaturmeßstelle 1 aufliegt und von dem elektrische Leitungen 6 durch das Innere des Rohres 2 zum Innern des Gehäuses 3 führen.

Im Gehäuse 3 liegt ein nicht dargestellter Verstärker ein, der mit den Leitungen 6 verbunden und mit Kunststoff allseits vergossen ist, so daß der Kunststoff alle vom Verstärker nicht ausgefüllten Zwischenräume im Innern des Gehäuses ausfüllt. Das Gehäuse 3 ist durch einen Deckel 7 verschlossen mit innenliegender Dichtung. der auf den Rand des topfförmigen Gehäuses koaxial aufgeschraubt ist und dessen Umfang mindestens eine Ausnehmung aufweist, damit in diese Ausnehmung ein Hakenschlüssel zur Drehbetätigung des Deckels 7 eingreifen kann. Durch eine Kette 9 ist der Deckel gehalten.

Das Gehäuse 3 weist seitlich eine Kabelanschlußöffnung 8 auf, durch die eine nicht dargestellte Leitung vom Verstärker zu Geräten führt, die die Meßergebnisse nutzen. Das Gehäuse 3 als auch der Deckel 7 besteht aus Edelstahl (V2A) Werkstoff Nr. 1.4301.

## Ansprüche

1. Vorrichtung zum Messen einer Temperatur mit einem Widerstands-Oberflächenmeßfühler und einem den Widerstandswert verarbeitenden Verstärker, wobei der Meßfühler im vorderen Ende eines Rohres bzw. einer Hülse befestigt ist, das Rohr auf der zu messenden Oberfläche befestigbar, insbesondere aufschweißbar ist und das der Oberfläche abgewandte Rohrende ein Gehäuse zum elektrischen Anschluß trägt, dadurch gekennzeichnet, daß der Verstärker im Gehäuse (3) befestigt ist.

2. Vorrichtung nach Anspruch 1, dadurch gekennzeichnet, daß der Verstärker im Gehäuse (3) durch einen Kunststoff eingegossen ist.

3. Vorrichtung nach einem der vorherigen Ansprüche, dadurch gekennzeichnet, daß das Gehäuse (3) aus Edelstahl besteht.

4. Vorrichtung nach einem der vorherigen Ansprüche, dadurch gekennzeichnet, daß ein den gesamten Querschnitt des Rohres (2) ausmachender Abschnitt (2b) des Rohres aus Kunststoff ist.

5. Vorrichtung nach Anspruch 4, dadurch gekennzeichnet, daß der Kunststoffabschnitt (2b) zwischen den beiden Rohrenden ist.

6. Vorrichtung nach Anspruch 4, dadurch gekennzeichnet, daß der Kunststoffabschnitt (2b) zwischen dem vorderen Rohrende und dem Gehäuse ist.

7. Vorrichtung nach einem der vorherigen Ansprüche, dadurch gekennzeichnet, daß das Gehäuse (3) durch einen Schraubdeckel (7) verschlossen ist.

8. Vorrichtung nach Anspruch 7, dadurch gekennzeichnet, daß der Schraubdeckel (7) am Umfang mindestens eine Ausnehmung für einen Hakenschlüssel aufweist.